# EUROPEAN PATENT APPLICATION

(11) **EP 4 012 062 A1**
(43) Date of publication of application: **15.06.2022**
(21) Application number: 20849746.1
(22) Date of filing: 07.08.2020
(51) Int. Cl.: C22C 21/06, C22F 1/047, C22C 1/04, B22F 3/10

(54) **ALUMINUM ALLOY FOR 3D PRINTING OR ADDITIVE MANUFACTURING, 3D PRINTING OR ADDITIVE MANUFACTURING METHOD USING SAME, AND ALUMINUM ALLOY PRODUCT OR COMPONENT MANUFACTURED BY 3D PRINTING OR ADDITIVE MANUFACTURING**

(30) Priority: 07.08.2019 KR 20190096337
(71) Applicant: Acts Technologies Inc., Seoul 06232 (KR)
(72) Inventor: LEE, Goon Hee, Seoul 06076 (KR)
(74) Representative: Gulde & Partner
(86) International application number: PCT/KR2020/010493
(87) International publication number: WO 2021/025531

(57) **Abstract**

The present invention provides an aluminum alloy for 3D printing or additive manufacturing, the aluminum alloy including 7% to 25% by weight of magnesium (Mg), 0% to 0.75% by weight of calcium (Ca), a total of 0.5% to 2.0% by weight of scandium (Sc) and zirconium (Zr), unavoidable impurities, and the remaining percentage of aluminum. In addition, the present invention provides a 3D printing or additive manufacturing method using the aluminum alloy.

## Description

### Technical Field

The present invention relates to an aluminum alloy for 3-dimensional (3D) printing or additive manufacturing, a 3D printing or additive manufacturing method using same, and an aluminum alloy product or component manufactured through 3D printing or additive manufacturing.

### Background Art

A metal 3D printing process or an additive manufacturing process is a new processing technology by which parts with complicated shapes, which cannot be implemented by conventional manufacturing technologies, can be easily manufactured. Metal 3D printing has the advantage of reducing the time required for product development compared to the traditional processing techniques such as casting, forging, welding, and extruding. 3D printing was used mainly and limitedly for prototyping in the past but has recently been used in various industrial fields such as aerospace, medical care, automobiles, machinery, and architecture.

Aluminum alloys have a wide range of applications having lightweight construction, such as aerospace, automotive, marine, wire and cable, electronic, nuclear, and consumer goods industries. However, compared to the traditional processing technology for aluminum alloy, 3D printing or additive manufacturing using aluminum alloy is not easy to apply due to increased manufacturing cost. In addition, since typical aluminum alloys exhibits high reflectance with respect to laser beams and has a dense surface oxide layer, high thermal conductivity, and a wide solidification range, it is difficult to use the typical aluminum alloys in 3D printing or additive manufacturing technology using a laser. On the other hand, current available commercial aluminum alloys for 3D printing include AlSi₇Mg, AlSi₁₀Mg, and AlSi₁₂, which are aluminum-silicon (Si) alloys, but these alloys have poorer mechanical properties than general wrought aluminum.

Recently, Scalmalloy^{®} in which scandium (Sc) and zirconium (Zr) are added to an aluminum-magnesium alloy, and Addalloy^{®} in which zirconium (Zr) is added to an aluminum-magnesium alloy have been developed. Among aluminum alloys, Scalmalloy^{®} has excellent mechanical properties but has the drawback of high cost because scandium (Sc) is contained at a high content of 0.6% by weight or more. In the case of Addalloy^{®} not containing scandium (Sc), it is relatively competitive in terms of price but it has the disadvantage of poor strength.

Therefore, the development of a new aluminum alloy having excellent properties suitable for 3D printing or additive manufacturing while being competitive in price is required.

### Disclosure

### Technical Problem

An objective of the present invention is to provide an aluminum alloy for 3D printing or additive manufacturing, the alloy being capable of solving the above problems, and to provide a 3D printing or additive manufacturing method using the same.

### Technical Solution

According to one aspect of the present invention, there is provided an aluminum alloy for 3D printing or additive manufacturing, the aluminum alloy containing:
7% to 25% by weight of magnesium (Mg);
0% to 0.75% by weight of calcium (Ca);
scandium (Sc) and zirconium (Zr) in a total amount of 0.5% to 2.0% by weight;
inevitable impurities; and
the remaining percentage by weight of aluminum.

In the aluminum alloy, the calcium (Ca) may be contained in an amount of 0.001% to 0.5% by weight.

A weight ratio of the scandium (Sc) to the zirconium (Zr) of the aluminum alloy may range from 0:1 to 1.5:1.

In the aluminum alloy, the magnesium (Mg) may be contained in an amount of 7% to 15% by weight.

In the aluminum alloy, Al₃Mg₂ phase accounts for 5% to 40% by volume.

The aluminum alloy contains at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

The aluminum alloy may have a powder or wire form.

According to another aspect of the present invention, there is provided a 3D printing or additive manufacturing method using an aluminum alloy, the method including:
(a) preparing a powder or wire from the aluminum alloy according to one embodiment;
(b) performing 3D printing or additive manufacturing using the powder or the wire; and
(c) heat-treating a product or part manufactured through the 3D printing or additive manufacturing.

In the aluminum alloy, the calcium (Ca) may be contained in an amount of 0.001% to 0.5% by weight.

A weight ratio of the scandium (Sc) to the zirconium (Zr) of the aluminum alloy may range from 0:1 to 1.5:1.

In the aluminum alloy, the magnesium (Mg) may be contained in an amount of 7% to 15% by weight.

In the aluminum alloy, Al₃Mg₂ phase accounts for 5% to 40% by volume.

The aluminum alloy contains at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

According to a further aspect of the present invention,
there is provided an aluminum alloy product or part manufactured through 3D printing or additive manufacturing, the product or part containing:
5% to 23% by weight of magnesium (Mg);
0% to 0.75% by weight of calcium (Ca);
scandium (Sc) and zirconium (Zr) in a total amount of 0.4% to 2.0% by weight;
inevitable impurities; and
the remaining percentage by weight of aluminum (Al) .

In the aluminum alloy product or part, the calcium (Ca) may be contained in an amount of 0.02% to 0.5% by weight.

A weight ratio of the scandium (Sc) to the zirconium (Zr) of the aluminum alloy product or part may range from 0:1 to 1.5:1.

In the aluminum alloy product or part, the magnesium (Mg) may be contained in an amount of 5% to 15% by weight.

In the aluminum alloy product or part, Al₃Mg₂ phase accounts for 5% to 40% by volume.

The aluminum alloy product or part may contain at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

### Advantageous Effects

It is possible to provide an aluminum alloy for 3D printing or additive manufacturing, the alloy capable of lowering manufacturing cost while having excellent properties such as light weight, excellent strength, corrosion resistance, and formability, and it is also possible to provide an aluminum alloy product or part manufactured through 3D printing or additive manufacturing using the same alloy.

It is possible to provide a 3D printing or additive manufacturing method using an aluminum alloy for 3D printing or additive manufacturing, the alloy capable of lowering manufacturing cost while having excellent properties such as, excellent strength,, and formability.

### Description of Drawings

1 is a process flowchart schematically illustrating a 3D printing or additive manufacturing method using an aluminum alloy for 3D printing or additive manufacturing, according to one embodiment of the present invention.

### Best Mode

Hereinafter, an aluminum alloy for 3D printing or additive manufacturing, according to one embodiment of the present invention, will be described in detail.

### <Aluminum Alloy for 3D Printing or Additive Manufacturing>

An aluminum alloy for 3D printing or additive manufacturing, according to one embodiment of the present invention, includes
7% to 25% by weight of magnesium (Mg,
0% to 0.75% by weight of calcium (Ca),
scandium (Sc) and zirconium (Zr) in a total amount of 0.5% to 2.0% by weight, and
inevitable impurities and aluminum as the remainder.

Here, the inevitable impurities may include all impurities that are unavoidably mixed in trace amounts during the alloy formation process or the product manufacturing process.

Calcium (Ca) is effective in securing a clean molten metal because it inhibits oxidation and vaporization of magnesium in the molten metal of aluminum alloy. However, when the amount of calcium (Ca) is excessive, powder with good spherical particles cannot be obtained from the molten metal because the flowability of the molten metal of the aluminum alloy is reduced. When the aluminum alloy according to the present invention contains calcium (Ca) in an amount that is more than 0% by weight and 0.75% by weight or less, it is possible to obtain a spherical sound powder in which the inflow of oxides is suppressed because oxidation and vaporization of magnesium in the molten metal of the aluminum alloy are inhibited.

However, in powder manufacturing equipment capable of forming a vacuum atmosphere, even though calcium (Ca) is not included, oxidation and vaporization of magnesium in the molten aluminum alloy are inhibited, and thus a spherical good powder without oxides introduced therein can be included. In this case, therefore, the aluminum alloy may not contain calcium (Ca). Calcium (Ca) in an aluminum alloy according to an embodiment of the present invention is contained in an amount of 0% to 0.75% by weight, about 0.001% to about 0.5% by weight, about 0.01% to about 0.4% by weight, or about 0.05% to about 0.3% by weight.

Scandium (Sc) and zirconium (Zr) may be used as alloying elements for refining grains in an aluminum alloy. In addition, scandium (Sc) and zirconium (Zr) are known as effective elements for improving the strength of an alloy by precipitating Al₃(Sc, Zr) phase through heat treatment. However, scandium (Sc) and zirconium (Zr) have disadvantages in that their price is relatively high compared to other alloying elements and that grain refinement and aging hardening effects are insignificant when they are contained at above a certain concentration. When the aluminum alloy contains a mixture of scandium (Sc) and zirconium (Zr) in an amount of about 0.5% to about 2.0% by weight, all of the strength improvement, grain refinement, and aging hardening effects can be obtained. However, since scandium (Sc) is a very expensive element, when scandium (Sc) is used solely as an additive alloying element, the unit cost of the alloy is significantly increased and it is thus difficult to commercialize the alloy. The weight ratio of scandium (Sc) to zirconium (Zr) in the aluminum alloy according to an embodiment of the present invention ranges from about 0:1 to about 1.5:1, from about 0.2:1 to about 1.2:1, or from about 0.3:1 to about 1:1.

Magnesium (Mg) generally exhibits solid solution strengthening and work hardening characteristics in the aluminum alloy, thereby effectively improving the strength of the aluminum alloy without special heat treatment. In addition, magnesium has an advantage in that the strength of an aluminum alloy can be increased without a decrease in elongation according to an increase in the magnesium content. However, the solid solution strengthening effect is important because the work hardening effect cannot be obtained in the 3D printing or additive manufacturing process. When the aluminum alloy contains less than about 7% by weight of magnesium, the solid solution strengthening effect is not significant, so that the strength improvement effect for the aluminum alloy cannot be sufficiently obtained. In addition, when the aluminum alloy contains magnesium in an amount exceeding about 25% by weight, magnesium vaporizes and is deposited on the surface of alloy particles during a 3D printing and additive manufacturing process due to the low vaporization temperature of magnesium. Therefore, it is difficult to print out or manufacture a good product. When the aluminum alloy contains about 7% to about 25% by weight of magnesium, the strength improvement of the alloy can be sufficiently obtained due to the solid solution strengthening effect, and it is possible to print out or manufacture a good product because the amount of magnesium vaporized during 3D printing and additive manufacturing is small. Magnesium (Mg) in the aluminum alloy according to one embodiment of the present invention may be contained in an amount of about 5% to about 25% by weight. Specifically, the content of magnesium (Mg) in the aluminum alloy may range from about 6% to about 20% by weight or from about 7% to about 15% by weight.

The aluminum alloy according to one embodiment of the present invention may include Al₃Mg₂ phase. Al₃Mg₂ phase can serve as a reinforcing phase to improve the strength of aluminum. In the aluminum alloy, the Al₃Mg₂ phase may account for about 5% to 40% by volume. Specifically, the Al₃Mg₂ phase may be contained in an amount of about 5% to about 30% by volume, or about 5% to about 20% by volume.

The aluminum alloy according to one embodiment of the present invention may further contain at least one element selected from the group consisting of manganese (Mn), titanium (Ti), beryllium (Be), tin (Sn), strontium (Sr), vanadium (V), hafnium (Hf), yttrium (Y), and rare earth metals, in an amount of 0.001% to 1.0% by weight. These metal elements may be included, for example, in the range of about 0.001% to about 1.0% by weight, about 0.005% to about 0.5% by weight, or about 0.005% to about 0.5% by weight.

The aluminum alloy according to one embodiment of the present invention may have a spherical shape or a wire shape but the shape of the aluminum alloy is not limited thereto.

Hereinafter, a 3D printing or additive manufacturing method according to one embodiment of the present invention will be described in detail.

### <3D Printing or Additive Manufacturing using Aluminum Alloy>

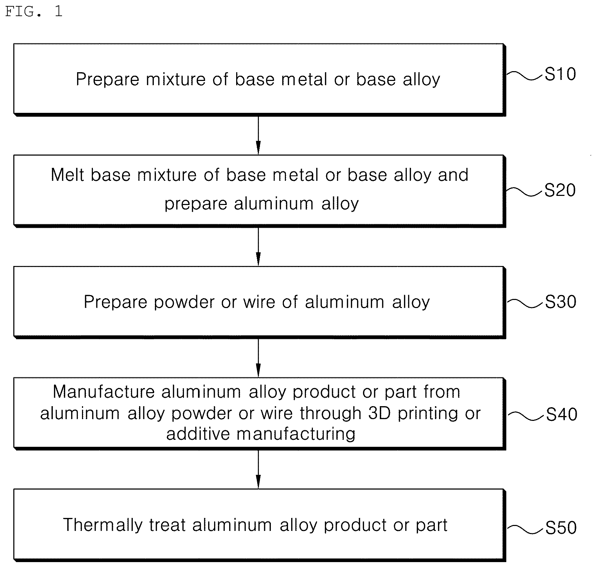

FIG. 1 is a process flowchart schematically illustrating a 3D printing or additive manufacturing method using an aluminum alloy for 3D printing or additive manufacturing, according to one embodiment of the present invention.
Referring to FIG. 1, in Step S10, a base metal mixture or a base alloy mixture for an aluminum alloy is prepared (S10). The base metal or alloy mixture is a metal or alloy which is a raw material used to form an aluminum alloy. The base metal or alloy mixture has a composition described in any one embodiment of the present invention. The base metal or alloy mixture may be prepared by mixing pure aluminum, magnesium-aluminum-calcium base alloy, aluminum-zirconium base alloy, or aluminum-scandium base alloy in a suitable composition ratio for the desired aluminum alloy. The composition ratio of the aluminum alloy is determined by referring to the composition ratio of the aluminum alloy for 3D printing or additive manufacturing, which is described above.

An aluminum alloy is prepared from the base metal or alloy mixture in Step S20. The aluminum alloy can be prepared by melting the base metal or alloy mixture. For example, the base metal or alloy mixture may be melted to prepare a molten metal, and an aluminum alloy ingot may be prepared from the molten metal. To prepare the molten metal, an induction melting furnace or an electric resistance furnace having a vacuum pressure or an atmospheric pressure may be used.

An aluminum alloy powder or wire is prepared from the prepared aluminum alloy material, in Step S30. Aluminum alloy powder or wire can be produced through gas atomizing, extrusion after drawing, etc. Aluminum alloy powder may be prepared by forming a molten metal of the aluminum alloy raw material and then performing gas atomizing on the molten metal. Alternatively, gas atomizing may be directly performed on the molten metal prepared in step S20 to prepare aluminum alloy powder.

The powder may have a particle size of about 10 to about 200 µm, and the wire may have a diameter in the same range as the powder and a length of about 0.5 to about 3 mm. However, the particle size, diameter, and length are not limited thereto.

3D printing or additive manufacturing is performed using the prepared aluminum alloy powder or wire and a 3D printer or an additive manufacturing apparatus to produce a desired product or part in Step S40. For example, a desired aluminum alloy product or part can be 3D printed or additively manufactured from the aluminum alloy powder, using a powder bed fusion (PBF) technique. In the powder bed fusion (PBF) technique, a desired product or part can be formed by thinly and uniformly spraying aluminum alloy powder on a powder bed, partially melting the sprayed powder using a high energy beam, and cooling it. This process is repeated layer by layer to form a desired shape. As the high energy beam, for example, a laser beam or an electron beam may be used. Aside from the powder bed fusion, any other techniques that are widely used in 3D printing or additive manufacturing can be used. For example, a desired product or part can be 3D printed or additively manufactured from a aluminum alloy wire, using one of the following techniques: direct energy deposition (DED), wire arc additive manufacturing (WAAM), etc. The product or part that can be 3D printed or additively manufactured from the aluminum alloy according to one embodiment of the present invention may be, for example, a product or part of an aircraft, automobile, machine, or medical device, but is not limited thereto.

Next, the aluminum alloy product or part produced through 3D printing or additive manufacturing of the aluminum alloy is heat-treated in Step S50. For the heat treatment, for example, annealing, aging, or double aging may be used. For example, the heat treatment may be performed in a temperature range of about 150°C to about 450°C, or about 170°C to about 420°C, or about 200°C to about 400°C.

### <Product or Part Produced through 3D Printing or Additive Manufacturing of Aluminum Alloy>

A product or part produced through an aluminum alloy 3D printing or additive manufacturing method according to one embodiment of the present invention includes
about 5% to about 23% by weight of magnesium (Mg),
0% to about 0.75% by weight of calcium (Ca),
scandium (Sc) and zirconium (Zr) in a total amount of about 0.4% to 2.0% by weight, and
inevitable impurities and aluminum as the remainder. Here, the inevitable impurities may include all impurities that are unavoidably mixed in trace amounts during an alloy formation process or a product manufacturing process.

The content of calcium (Ca) may be, for example, about 0.02% to about 0.5% by weight.

The content of magnesium (Mg) may be, for example, about 5% to about 15% by weight.

A weight ratio of the scandium (Sc) to the zirconium (Zr) of the aluminum alloy product or part may range from 0:1 to 1.5:1.

In the aluminum alloy product or part, Al₃Mg₂ phase accounts for about 3% to about 40% by volume.

The aluminum alloy product or part may further contain at least one element selected from the group consisting of manganese (Mn), titanium (Ti), beryllium (Be), tin (Sn), strontium (Sr), vanadium yttrium (Y), and rare earth metals, in an amount in a range of about 0.001% to about 1.0% by weight.

Since vaporization of magnesium during the 3D printing or additive manufacturing process is an unavoidable phenomenon, the content of magnesium in the aluminum alloy product or part produced through the 3D printing or additive manufacturing, according to the present invention, may lower than the content of magnesium in the aluminum alloy introduced into the 3D printing and additive manufacturing process.

### Example 1

A mixture in which alloy raw materials were blended in a composition ratio described below was prepared. The mixture included 7% by weight of magnesium, 0.7% by weight of scandium plus zirconium (weight ratio of scandium:zirconium is 0.4:1), 0.07% by weight of calcium, and the remaining percentage of aluminum. In this case, as the metal raw materials of the composition, pure aluminum, a magnesium-aluminum-calcium base alloy, an aluminum-zirconium base alloy, and an aluminum-scandium base alloy were used.

The raw material mixture was put into an induction melting furnace (a custom-made product manufactured by PSTEC) having a capacity of 7 kg of an aluminum alloy and was melted in the furnace to prepare a molten aluminum alloy. From this molten metal, an aluminum alloy ingot was manufactured. The aluminum alloy ingot was processed into aluminum alloy powder. From the produced aluminum alloy powder was introduced into a metal 3D printer (dpert M135, Daegun Tech Co., Ltd., Korea), and an aluminum alloy sample was prepared through additive manufacturing. The aluminum alloy sample was heat-treated in an electric resistance furnace at about 400° C for about 8 hours.

### Example 2

A mixture in which alloy raw materials were blended in a composition ratio described below was prepared. The mixture included 10% by weight of magnesium, 0.9% by weight of scandium plus zirconium (weight ratio of scandium:zirconium is 0:1), 0.10% by weight of calcium, and the remaining percentage of aluminum. Then, a sample was prepared in the same manner as in Example 1 except for the composition of the mixture.

### Example 3

A mixture in which alloy raw materials were blended in a composition ratio described below was prepared. The mixture included 10% by weight of magnesium, 1.2% by weight of scandium plus zirconium (weight ratio of scandium:zirconium is 0:1), 0.10% by weight of calcium, and the remaining percentage of aluminum. A sample was prepared in the same manner as in Example 1 except for the composition of the mixture.

### Example 4

A mixture in which alloy raw materials were blended in a composition ratio described below was prepared. The mixture includes 10% by weight of magnesium, 0.7% by weight of scandium plus zirconium (weight ratio of scandium:zirconium is 0.4:1), 0.10% by weight of calcium, and the remaining percentage of aluminum. Then, a sample was prepared in the same manner as in Example 1 except for the composition of the mixture.

### Example 5

A mixture in which alloy raw materials were blended in a composition ratio described below was prepared. The mixture included 13% by weight of magnesium, 1.2% by weight of scandium plus zirconium (weight ratio of scandium:zirconium is 0.5:1), 0.13% by weight of calcium, and the remaining percentage of aluminum. A sample was prepared in the same manner as in Example 1 except for the composition of the mixture.

Table 1 shows the aluminum alloy compositions of Examples 1 to 5 and the aluminum alloy compositions of respective commercial aluminum alloys as Comparative Examples 1 to 4.

**[Table 1]**

| | Magnesium (wt%) | Scandium + Zirconium (wt%) | Silicon (wt%) | Zinc (wt%) | Calcium (wt%) | Aluminum | Scandium: Zirconium |
|---|---|---|---|---|---|---|---|
| Example 1 | 7 | 0.7 | - | - | 0.07 | Bal. | 0.4:1 |
| Example 2 | 10 | 0.9 | - | - | 0.10 | Bal. | 0:1 |
| Example 3 | 10 | 1.2 | - | - | 0.10 | Bal. | 0:1 |
| Example 4 | 10 | 0.7 | - | - | 0.10 | Bal. | 0.4:1 |
| Example 5 | 13 | 1.2 | - | - | 0.13 | Bal. | 0.5:1 |
| Comparati ve Example 1 | 0.2 to 0.45 | - | 9 to 11 | - | - | Bal. | - |
| Comparati ve Example 2 | 3.66 | 1.57 | - | - | - | Bal. | 0 |
| Comparati ve Example 3 | 2 | 1 | - | 6 | - | Bal. | 2.3:1 |
| Comparati ve Example 4 | 4.5 | 1 | - | - | - | Bal. | 2.3:1 |

Among Comparative Examples 1 to 4 in Table 1, Comparative Example 1 is the composition of AlSi10Mg which is a commercial aluminum alloy for 3D printing, and Comparative Example 2 is the composition of Addalloy^{®} and an aluminum alloy described in Non-Patent Document 1. Comparative Example 3 is the composition of an aluminum alloy described in Non-Patent Document 2, and Comparative Example 4 is the composition of Scalmalloy^{®}.

### Measurement of mechanical properties

A tensile test was performed according to ASTM E8 Standard Test Methods for Tension Testing of Metallic Materials. The aluminum alloy 3D printing samples prepared in Examples 1 to 5 were processed into the form of a dog bone having a gauge length of about 10 mm and a diameter of about 4 mm. Although the size of the samples for tensile testing was smaller than the sample size specified in the ASTM E8 standard, since the diameter of a test section is large to contain about 26 laser passes and the width of a test section is large to contain about 5600 or more particles, the measured mechanical properties are appropriate as measurements according to the test method specified by the standard. A room temperature tensile test was performed on the samples at a speed of about 0.6 mm/min.

The values of the yield strength, tensile strength, and elongation of the aluminum alloy samples of Examples 1 to 5 measured in the tensile test are shown together with the values of Comparative Examples 1 to 4, in Table 2.

**[Table 2]**

| | Yield Strength (MPa) | Tensile Strength (MPa) | Elongation (%) |
|---|---|---|---|
| Example 1 | 400 | 500 | 20 |
| Example 2 | 336 | 432 | 6 |
| Example 3 | 337 | 438 | 6 |
| Example 4 | 400 | 540 | 18 |
| Example 5 | 397 | 423 | 6.8 |
| Comparative Example 1 | 211 | 329 | 9 |
| Comparative Example 2 | 365 | 389 | 24 |
| Comparative Example 3 | 418 | 436 | 11 |
| Comparative Example 4 | 470 | 520 | 13 |

In Table 2, the characteristic values of Comparative Example 1 were extracted from ConceptLaser's Data Sheet, and the characteristic values of Comparative Examples 2 and 3 were extracted from Non-Patent Document 1 and Non-Patent Document 2, respectively. The characteristic values of Comparative Example 4 were extracted from the APWORKS website. Referring to Table 2, the room temperature tensile strength values of the aluminum alloy samples according to Examples 1 to 5 are about 420 MPa or more, which is higher than those of the alloys of Comparative Examples 1 and 2 and lower than those of the alloys of Comparative Examples 3 and 4. However, the alloys of Comparative Examples 3 and 4 have a high scandium-to-zirconium ratio and a high scandium content of about 0.7% by weight. For this reason, these alloys are disadvantageous in terms of price competitiveness.
The mechanical property value of the aluminum alloy of Comparative Example 1 being low in the content of magnesium (Mg) and containing neither scandium (Sc) nor zirconium (Zr) was the lowest. From this result, it is inferred that the addition of magnesium, scandium, and zirconium improves mechanical properties.

In addition, the alloys of Examples 1 to 5 have higher tensile strength than the aluminum alloy of Comparative Example 2 containing scandium (Sc) and zirconium (Zr) but having a low magnesium (Mg) content. From this result, it is inferred that the strength of the alloy increases due to the addition of a large amount of magnesium (Mg).

Therefore, the aluminum alloys prepared in Examples of the present invention have improved mechanical properties even though prepared at low cost. The aluminum alloys according to the embodiments of the present invention are suitable as materials for 3D printing or additive manufacturing for applications such as automobiles, aerospace, and industrial devices that require good mechanical properties such as light weight, high strength, corrosion resistance, and formability. However, the applications of the aluminum alloys according to the present invention are not limited thereto.

Although embodiments of the invention have been described herein for reference and illustration, various modifications will be apparent to those skilled in the art without departing from the scope of the invention as defined by the appended claims.

## Claims

1. Aluminum alloy for 3D printing or additive manufacturing, the aluminum alloy comprising 7% to 25% by weight of magnesium (Mg), 0% to 0.75% by weight of calcium (Ca), a total of 0.5% to 2.0% by weight of scandium (Sc) and zirconium (Zr), unavoidable impurities, and the remaining percentage of aluminum.

2. The aluminum alloy of claim 1, wherein the calcium (Ca) is contained in an amount of 0.001% to 0.5% by weight.

3. The aluminum alloy of claim 1, wherein a weight ratio of the scandium (Sc) to the zirconium (Zr) ranges from 0:1 to 1.5:1.

4. The aluminum alloy of claim 1, wherein the magnesium (Mg) is contained in an amount of 7% to 15% by weight.

5. The aluminum alloy of claim 1, wherein Al₃Mg₂ phase is contained in an amount of 5% to 40% by volume.

6. The aluminum alloy of claim 1, further comprising at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

7. The aluminum alloy of claim 1, having a powder or wire form.

8. A 3D printing or additive manufacturing method using an aluminum alloy, the method comprising: (a) preparing a powder or wire from the aluminum alloy of claim 1; (b) 3D printing or additive manufacturing using the powder or the wire; and (c) heat-treating a product or part produced through the 3D printing or additive manufacturing.

9. The method of claim 8, wherein the aluminum alloy contains the calcium (Ca) in an amount of 0.001% to 0.5% by weight.

10. The method of claim 8, wherein a weight ratio of the scandium (Sc) to the zirconium (Zr) in the aluminum alloy ranges from 0:1 to 1.5:1.

11. The method of claim 8, wherein the aluminum alloy contains the magnesium (Mg) in an amount of 7% to 15% by weight.

12. The method of claim 8, wherein the aluminum alloy contains Al₃Mg₂ phase in an amount of 5% to 40% by volume.

13. The method of claim 8, wherein the molten metal further comprises at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

14. The method of claim 8, wherein the heat treatment comprises at least one among annealing, aging, and double aging.

15. An aluminum alloy product or part that is 3D-printed or additively manufactured, the aluminum alloy product or part comprising 5% to 23% by weight of magnesium (Mg), 0% to 0.75% by weight of calcium (Ca), a total of 0.4% to 2.0% by weight of scandium (Sc) and zirconium (Zr), unavoidable impurities, and the remaining percentage of aluminum.

16. The aluminum alloy product or part of claim 15, wherein the calcium (Ca) is contained in an amount of 0.02% to 0.5% by weight.

17. The aluminum alloy product or part of claim 15, wherein a weight ratio of the scandium (Sc) to the zirconium (Zr) ranges from 0:1 to 1.5:1.

18. The aluminum alloy product or part of claim 15, wherein the magnesium (Mg) is contained in an amount of 5% to 15% by weight.

19. The aluminum alloy product or part of claim 15, wherein Al₃Mg₂ phase is contained in an amount of 3% to 40% by volume.

20. The aluminum alloy product or part of claim 15, further comprising at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

## Amended claims

### Amended claims under Art. 19.1 PCT

1. An aluminum alloy for 3D printing or additive manufacturing, the aluminum alloy comprising 7% to 25% by weight of magnesium (Mg), 0% to 0.75% by weight of calcium (Ca), a total of 0.5% to 2.0% by weight of scandium (Sc) and zirconium (Zr), unavoidable impurities, and the remaining percentage of aluminum,
wherein a weight ratio of the scandium (Sc) to the zirconium (Zr) ranges from 0:1 to 1.5:1

2. The aluminum alloy of claim 1, wherein the calcium (Ca) is contained in an amount of 0.001% to 0.5% by weight.

3. The aluminum alloy of claim 1, wherein the magnesium (Mg) is contained in an amount of 7% to 15% by weight.

4. The aluminum alloy of claim 1, wherein Al₃Mg₂ phase is contained in an amount of 5% to 40% by volume.

5. The aluminum alloy of claim 1, further comprising at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

6. The aluminum alloy of claim 1, having a powder or wire form.

7. A method of 3D printing or additive manufacturing using an aluminum alloy, the method comprising: (a) preparing a powder or wire from the aluminum alloy of claim 1; (b) performing 3D printing or additive manufacturing using the powder or the wire; and (c) heat-treating a product or part produced through the 3D printing or additive manufacturing.

8. The method of claim 8, wherein the aluminum alloy contains the calcium (Ca) in an amount of 0.001% to 0.5% by weight.

9. The method of claim 8, wherein the aluminum alloy contains the magnesium (Mg) in an amount of 7% to 15% by weight.

10. The method of claim 8, wherein the aluminum alloy contains Al₃Mg₂ phase in an amount of 5% to 40% by volume.

11. The method of claim 8, wherein the aluminum alloy further comprises at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.

12. The method of claim 8, wherein the heat treatment comprises at least one among annealing, aging, and double aging.

13. An aluminum alloy product manufactured through 3D printing or additive manufacturing, the product or part comprising: 5% to 23% by weight of magnesium (Mg), 0% to 0.75% by weight of calcium (Ca), a total of 0.4% to 2.0% by weight of scandium (Sc) and zirconium (Zr), unavoidable impurities, and the remaining percentage of aluminum,
wherein a weight ratio of the scandium (Sc) to the zirconium (Zr) ranges from 0:1 to 1.5:1.

14. The product of claim 15, wherein the calcium (Ca) is contained in an amount of 0.02% to 0.5% by weight.

15. The product of claim 15, wherein the magnesium (Mg) is contained in an amount of 5% to 15% by weight.

16. The product of claim 15, wherein Al₃Mg₂ phase is contained in an amount of 3% to 40% by volume.

17. The product of claim 15, further comprising at least one element selected from the group consisting of manganese (Mn), titanium (Ti), beryllium (Be), tin (Sn), strontium (Sr), vanadium (V), hafnium (Hf), yttrium (Y), and rare earth metals, in an amount in a range of 0.001% to 1.0% by weight.
